# EUROPEAN PATENT APPLICATION

(11) **EP 4 814 560 A1**
(43) Date of publication of application: **30.09.2026**
(21) Application number: 25193492.3
(22) Date of filing: 01.08.2025
(51) Int. Cl.: G02B 19/00, F21V 5/04, F21V 5/08

(54) **OPTICAL SYSTEM**

(30) Priority: 28.03.2025 CN 202510382090
(71) Applicant: Yaham Optoelectronics. Co., Ltd., Shenzhen, Guangdong 518000 (CN)
(72) Inventor: LIU, Pingkun, Shenzhen, 518000 (CN); LI, Xiaojie, Shenzhen, 518000 (CN)
(74) Representative: Monteiro Alves, Inês

(57) **Abstract**

Disclosed is an optical system, including: a light-emitting element, an optical conductor and a lens. The light-emitting element and the optical conductor are integrally formed, the light-emitting element is configured to emit light in a first direction, and the optical conductor at least covers a light-emitting side of the light-emitting element in the first direction; and the lens is provided at one side of the optical conductor towards the first direction. A light diffusing agent is added to a forming material of the optical conductor.

## Description

### TECHNICAL FIELD

The present application relates to the technical field of lighting display, and in particular to an optical system.

### BACKGROUND

In the application of multi-color light sources for surface-mount device (SMD), such as the combination of red, green, blue, yellow, amber and white, due to the difference in light-emitting angles and physical position offset of chips of different colors, problems such as uneven color distribution and brightness fluctuation in different directions are prone to occur when light is mixed. In order to improve the color mixing effect, conventional solutions need to rely on long-distance optical conductors or complex light splitting systems to achieve even light diffusion through multiple total reflections.

In the related art, the light source and the optical conductor are mostly designed in a split type, such as indirectly connecting the light-emitting element and the optical conductor through optical fibers, light guides or lens components, and the split optical path coupling is prone to reduce light efficiency and insufficient stability due to assembly errors.

### SUMMARY

The purpose of the present application is to overcome the shortcomings in the related art and provide an optical system to solve the technical problems that the light source and the optical conductor are mostly designed in a split type in the related art, and the split optical path coupling is prone to reduce light efficiency and insufficient stability due to assembly errors.

To achieve the above purpose, the present application adopts the following technical solutions.

The present application provides an optical system, including:
a light-emitting element configured to emit light in a first direction;
an optical conductor at least covering a light-emitting side of the light-emitting element in the first direction; and
a lens provided at one side of the optical conductor towards the first direction,
the light-emitting element and the optical conductor are integrally formed, and a light diffusing agent is added to a forming material of the optical conductor.

In an embodiment, the lens includes a light-incident surface and a light-exiting surface, and a distance between the light-exiting surface and the light-incident surface gradually decreases along a second direction.

In an embodiment, a thickness of the lens gradually decreases along a second direction.

In an embodiment, a distance between the lens and the light-emitting element is in a range of 3mm to 15mm.

In an embodiment, the light diffusing agent includes one or more of silicon dioxide, polysiloxane particles, aluminum oxide and borosilicate glass.

In an embodiment, the optical conductor includes a first curved surface structure configured to gather an angle of light emitted by the light-emitting element; and

a cross-sectional area of the first curved surface structure along the first direction is unchanged or gradually decreases.

In an embodiment, the first curved surface structure includes a first light-guiding portion provided at one end of the first direction, and a cross-sectional area of the first light-guiding portion gradually decreases along the first direction.

In an embodiment, a length of the first curved surface structure in the first direction is in a range of 1mm to 20mm; and/or
a cross-sectional diameter of the first curved surface structure in the first direction is in a range of 2mm to 50mm.

In an embodiment, the optical conductor is integrated with the light-emitting element through a molding process.

In an embodiment, a light-emitting angle of the light-emitting element is in a range of 90° to 130°; and/or
a light-emitting angle of light emitted by the light-emitting element after passing through the optical conductor is in a range of 30° to 90°.

In the optical system of the present application, the light-emitting element and the optical conductor are integrated structure, which effectively avoids the assembly error problem caused by the split design by designing, improves the stability of the optical path coupling, and reduces the risk of light efficiency reduction. The optical conductor covers the light-emitting side of the light-emitting element, which can gather the light emitted by the light-emitting element, narrow the light angle, make the light more concentrated and directional, improve the mixing effect of light of different colors, and reduce the problems of uneven color distribution and brightness fluctuation.

The above description is only an overview of the technical solution of the present application. In order to more clearly understand the technical means of the present application, it can be implemented according to the content of the specification. In order to make the above and other purposes, features and advantages of the present application more obvious and easy to understand, embodiments are described in detail as follows.

### BRIEF DESCRIPTION OF THE DRAWINGS

FIG. 1 is a stereoscopic view of an integrated structure of a light-emitting element and an optical conductor of an optical system according to an embodiment of the present application.
FIG. 2 is a front view of the integrated structure of the light-emitting element and the optical conductor of the optical system according to an embodiment of the present application.
FIG. 3 is a stereoscopic view of the optical system according to an embodiment of the present application.
FIG. 4 is a front view of the optical system according to an embodiment of the present application.
FIG. 5 is an enlarged view at a portion A of FIG. 4.
FIG. 6 is an enlarged view at a portion B of FIG. 4.
FIG. 7 is a light simulation view of the optical system according to an embodiment of the present application.
FIG. 8 is a schematic view of an internal structure of the optical system according to an embodiment of the present application.

### Description of reference signs:

10, light-emitting element; 11, optical conductor; 111, first curved surface structure; 1111, first light-guiding portion; 12, first mounting seat; 13, first threaded rod; 14, first bearing; 15, first guide rod; 20, first substrate; 30, lens; 301, light-exiting surface; 302, light-incident surface; 31, first sliding member; 32, second sliding member; 40, first slide track; 50, second slide track; 60, light-transmitting cover; 70, cooling fan.

### DETAILED DESCRIPTION OF THE EMBODIMENTS

In order to make the purpose, technical solution and advantages of the present application clearer, the present application is further described in detail in combination with the accompanying drawings and specific embodiments.

The following will be combined with the drawings in the embodiments of the present application to clearly and completely describe the technical solution in the embodiments of the present application. Obviously, the described embodiments are only part of the present application, not all of the embodiments. Based on the embodiments in the present application, all other embodiments obtained by those skilled in the art without creative efforts are within the scope of the present application.

In the description of the present application, it can be understood that the terms "center", "longitudinal", "lateral", "length", "width", "thickness", "up", "down", "front", "back", "left", "right", "resin", "horizontal", "top", "bottom", "inside", "outside", "clockwise", "counterclockwise" and the like indicate the orientation or position relationship based on the orientation or position relationship described in the drawings, which is only for the convenience of describing the present application and simplifying the description, rather than indicating or implying that the device or element referred to must have a specific orientation, be constructed and operated in a specific orientation, and therefore cannot be understood as a limitation on the present application.

In addition, the terms "first" and "second" are only configured for descriptive purposes, and cannot be understood as indicating or implying relative importance or implicitly indicating the number of technical features indicated. Therefore, the features defined as "first" and "second" may explicitly or implicitly include one or more of the features. In the description of the present application, "multiple" means two or more, unless otherwise clearly and specifically defined.

In the present application, unless otherwise clearly specified and limited, the terms "installed", "connected", "communicated", "fixed" and the like can be understood in a broad sense, for example, it can be connected, detachably connected, or integrated; it can be mechanically connected or electrically connected; it can be directly connected or indirectly connected through an intermediate medium, it can be the internal connection of two elements or the interaction relationship between two elements. For those skilled in the art, the specific meanings of the above terms in the present application can be understood according to the specific circumstances.

In the present application, unless otherwise clearly specified and limited, the first feature "above" or "below" the second feature can include the first and second features directly contacting, or it can include the first and second features not directly contacting but contacting through another feature between them. Moreover, the first feature "above", "on" and "upon" the second feature include the first feature being directly above and obliquely above the second feature, or simply means that the first feature is higher in level than the second feature. The first feature "below", "under" and "beneath" the second feature include the first feature being directly below and obliquely below the second feature, or simply means that the first feature is lower in level than the second feature.

In the description of the present application, the reference terms such as "an embodiment", "an embodiment", "example", "specific example", or "some examples" means that the specific features, structures, materials or characteristics described in conjunction with the embodiment or example are included in at least an embodiment or example of the present application. In the present application, the schematic representation of the above terms should not be understood as necessarily being directed to the same embodiment or example. Moreover, the specific features, structures, materials or characteristics described can be combined in any one or more embodiments or examples in a proper manner.

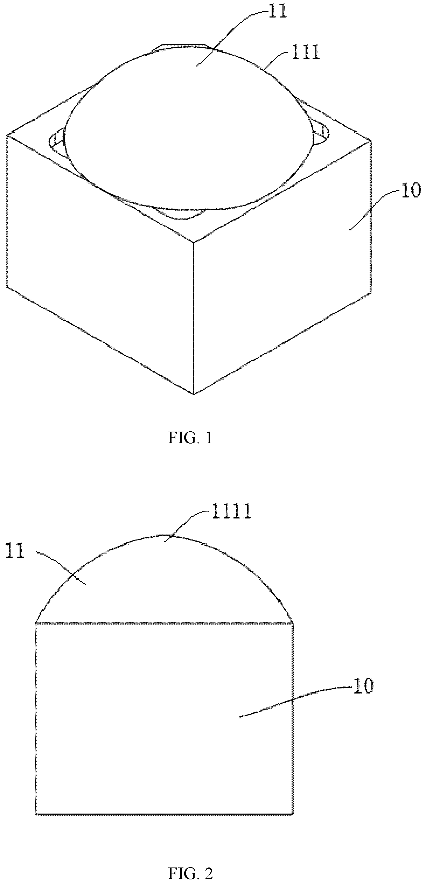

Referring to FIG. 1 and FIG. 2, an embodiment of the present application provides an optical system, including a light-emitting element 10 and an optical conductor 11. The light-emitting element 10 and the optical conductor 11 are an integrated structure, the light-emitting element 10 is configured to emit light in a first direction, and the optical conductor 11 at least covers the light-emitting side of the light-emitting element 10 in the first direction. The optical conductor 11 includes a first curved surface structure 111, and the first curved surface structure 111 is configured to narrow the angle of light emitted by the light-emitting element 10. In an embodiment, the light-emitting element 10 includes a lamp bead, and the lamp bead includes light-emitting chips of one or more colors. For example, the lamp bead includes one or more of red, green, blue, yellow, amber and white chips. For another example, the lamp bead includes red, green and blue chips. The combination of light-emitting chips included in the lamp bead is not described in detail here.

It can be understood that the light-emitting element 10 and the optical conductor 11 are an integrated structure, so that the assembly error problem caused by the split design is effectively avoided, the stability of the optical path coupling is improved, and the risk of light efficiency reduction is reduced. The optical conductor 11 covers the light-emitting side of the light-emitting element 10, which can gather the light emitted by the light-emitting element 10, narrow the light angle, make the light more concentrated and directional, improve the mixing effect of light of different colors, and reduce the problems of uneven color distribution and brightness fluctuation. It should be noted that the first curved surface structure 111 in this embodiment is not only configured to narrow the angle of light emitted by the light-emitting element 10, but also configured to provide a carrier for multiple reflections and refractions for the incident light from the light-emitting element 10, so that light of different colors is mixed more evenly in the optical conductor 11, and the color of the light emitted through the optical conductor 11 is more even.

In an embodiment, the light-emitting element 10 emits light in a first direction, and the light first enters the optical conductor 11 connected thereto. The light is gradually uniformed after multiple reflections and refractions inside the optical conductor 11, and the light of different colors is fully mixed in this process. The first curved surface structure 111 of the optical conductor 11 converges the light, narrows the angle of the light, and propagates forward more concentratedly. The light processed by the optical conductor 11 is finally emitted to form a relatively even beam, avoiding the problem of uneven color distribution and brightness fluctuation in different directions.

Further, the cross-sectional area of the first curved surface structure 111 in the first direction remains unchanged or gradually decreases. It should be noted that, in order to achieve better light control and color mixing effect, by controlling the change of the cross-sectional area of the first curved surface structure 111 in the first direction, the reflection, refraction and diffusion behavior of the light in the optical conductor 11 can be affected, thereby optimizing the output characteristics of the light, making it more even and concentrated, further improving the color mixing effect of the multi-color light source, and reducing problems such as uneven color distribution and brightness fluctuation. In this embodiment, when the cross-sectional area of the first curved surface structure 111 remains unchanged, the light will propagate therein according to the fixed reflection and refraction law, maintain a relatively stable beam width and angle, and gradually propagate forward and be evenly mixed. When the cross-sectional area of the first curved surface structure 111 gradually decreases, the light will continuously encounter the gradually narrowing curved surface during the propagation process, and will be guided to the center each time it is reflected. The angle of the light will gradually decrease, the beam will gradually narrow, and finally form a more concentrated and narrow beam when output from the optical conductor 11. Lights of different colors are also better mixed in this process.

In an embodiment, the first curved surface structure 111 includes a first light-guiding portion 1111 provided at the end of the first direction, and the cross-sectional area of the first light-guiding portion 1111 gradually decreases along the first direction. It can be understood that the cross-sectional area of the first light-guiding portion 1111 provided at the end of the first direction gradually decreases along the first direction, that is, the first light-guiding portion 1111 with a gradually decreasing cross-sectional area is provided at the position where the light is about to leave the optical conductor 11, so that the light can be more concentrated and directed when output, thereby improving the brightness and color mixing effect of the optical system, reducing the scattering and energy loss of the light, and improving the overall optical performance.

In an embodiment, the light emitted by the light-emitting element 10 first enters the first curved surface structure 111 of the optical conductor 11, and reaches the first light-guiding portion 1111 at the end of the first direction of the optical conductor 11 after propagating. In the first light-guiding portion 1111, as the cross-sectional area gradually decreases, the light will be further gathered, and the divergence angle will be further reduced. Finally, the light processed by the first light-guiding portion 1111 will be output from the optical conductor 11 in the form of a more concentrated and narrow beam, achieving better light control and output effects.

In an embodiment, the first curved surface structure 111 includes a second light-guiding portion provided between the first light-guiding portion 1111 and the light-emitting element 10, and the cross-sectional area of the second light-guiding portion along the first direction remains unchanged. It can be understood that the second light-guiding portion with a constant cross-sectional area is provided between the first light-guiding portion 1111 and the light-emitting element 10, so that a stable propagation environment can be provided for the light, and the light can be prevented from being excessively divergent or unevenly distributed before entering the first light-guiding portion 1111, thereby improving the utilization rate and color mixing effect of the light and reducing the loss and unevenness of the light.

In an embodiment, after being emitted from the light-emitting element 10, the light first enters the second light-guiding portion. Since the cross-sectional area of the second light-guiding portion remains unchanged along the first direction, the light will propagate therein according to a relatively stable reflection and refraction law, and there will be no light convergence or divergence changes caused by changes in the cross-sectional area. Therefore, the light can maintain a relatively even distribution and a stable propagation direction before entering the first light-guiding portion 1111, providing a good foundation for the subsequent further gathering and concentration of the light by the first light-guiding portion 1111.

In an embodiment, the second light-guiding portion may be a cylinder or a prism.

In an embodiment, the length of the first curved surface structure 111 in the first direction is in the range of 1mm to 20mm; and/or, the cross-sectional diameter of the first curved surface structure 111 in the first direction is in the range of 2mm to 50mm.

Further, a light diffusing agent is added to the forming material of the optical conductor 11. It can be understood that the function of the light diffusing agent is to disperse the light, make the light softer and more even, and avoid the light being too glaring or uneven brightness. Specifically, the light diffusing agent is a microsphere product, which is added to the forming material of the optical conductor 11. When the light passes through the optical conductor 11, optical phenomena such as refraction, reflection and scattering will occur at the microsphere surface of the light diffusing agent, making the output light more even, avoiding the phenomenon of local over-brightness or over-darkness, and improving the quality of the lighting effect.

It should be noted that the length of the light-guiding column in the related art is usually long. The light is sufficiently reflected and refracted by using an optical path with a long propagation path, so that the light is fully mixed after multiple reflections and refractions. However, the long light-guiding column will increase the attenuation and loss during the light transmission process, making the lighting effect worse. The long light-guiding column will also increase the volume and cost of the module, and the assembly complexity will also increase accordingly. In view of this, in this embodiment, the length of the first curved surface structure 111 along the first direction is within the range of 1mm to 20mm, which fully reduces the length of the optical conductor 11. However, the means to achieve this effect is to add a light diffusing agent to the optical conductor 11, so that the light can achieve better diffusion and even mixing effects in a shorter optical path, and the color of the light emitted through the shorter optical conductor 11 in this embodiment can be mixed evenly. With the optical system of this embodiment, the shorter length and smaller cross-sectional diameter of the optical conductor 11 bring about a smaller volume, making the assembly of the entire optical system easier, improving production efficiency and product reliability, which helps to reduce the overall volume of the optical system, reduce material and production costs, and make the product more competitive in the market.

In an embodiment, the light diffusing agent includes one or more of silicon dioxide, polysiloxane particles, aluminum oxide, and borosilicate glass. It should be noted that silicon dioxide, polysiloxane particles, aluminum oxide, and borosilicate glass can effectively scatter and refract light inside the optical conductor 11, so that the light is more evenly distributed, thereby improving the evenness and softness of the lighting effect. The silicon dioxide is an inorganic light diffusing agent, and its particles can scatter and refract light, so that the light is more evenly distributed. The polysiloxane particles are organic light diffusing agents, and the light will be refracted multiple times when passing through them, realizing light diffusion while maintaining a high light transmittance. The aluminum oxide has good optical properties and chemical stability, and can be configured as a light diffusing agent to improve the haze and light diffusion effect of the material. The borosilicate glass has good heat resistance and chemical stability, and its particles can effectively scatter and refract light to achieve even distribution of the light.

In an embodiment, the optical conductor 11 is made of resin or other light-transmitting materials as the base material. During the casting process of the optical conductor 11, one or more of silicon dioxide, polysiloxane particles, aluminum oxide, and borosilicate glass are added as light diffusing agents. When entering the optical conductor 11, the light encounters these light diffusing agent particles. After being processed by the light diffusing agent, the light is output from the optical conductor 11 to form a softer and more even beam, thereby avoiding the problems of glare and uneven brightness.

In an embodiment, the optical conductor 11 and the light-emitting element 10 are formed into an integrated structure by a molding process. It should be noted that the molding process is a high-precision processing technology, which directly molds and forms an optical part that meets the use requirements by placing a transparent material such as softened glass, resin or plastic into a high-precision mold, and treating it in a heating, pressurizing and oxygen-free environment. In the integrated structure of the optical conductor 11 and the light-emitting element 10 of this embodiment, the molding process can accurately control the relative position and shape of the optical conductor 11 and the light-emitting element 10, and ensure that the optical conductor 11 effectively gathers and controls the light emitted by the light-emitting element 10. At the same time, the combination strength and stability of the optical conductor 11 and the light-emitting element 10 is improved, assembly errors are reduced, and the accuracy and stability of optical path coupling are improved, thereby improving the performance and reliability of the optical system.

In an embodiment, the optical system includes a first substrate 20 as a mounting carrier of the light-emitting element 10, which can provide a mounting surface for the combined structure of the light-emitting element 10 and the optical conductor 11, and provide power for the light-emitting element 10. The first substrate 20 can be a circuit board, and the light-emitting element 10 can be directly soldered on the first substrate 20 through electronic circuit surface mount technology (SMT).

In an embodiment, the first substrate 20 with the light-emitting element 10 installed thereon is placed in a forming mould, a forming cavity for forming the optical conductor 11 is provided in the forming mould, and the light-emitting element 10 installed at the first substrate 20 is placed in the forming cavity. The main body of the optical conductor 11 is formed by injecting transparent materials such as softened glass, resin or plastic into the forming cavity, and one or more of silicon dioxide, polysiloxane particles, aluminum oxide, and borosilicate glass are added as light diffusing agents. Finally, after cooling the forming and demolding, the integrated structure of the optical conductor 11 and the light-emitting element 10 is obtained. The optical conductor 11 is tightly bonded to the light-emitting element 10, which reduces the assembly error, improves the accuracy and stability of the optical path coupling, and improves the performance and reliability of the optical system.

In an embodiment, the light-emitting angle of the light-emitting element 10 is in the range of 90° to 130°; and/or, the light-emitting angle of the light emitted by the light-emitting element 10 after passing through the optical conductor 11 is in the range of 30° to 90°. It should be noted that the light-emitting angle is also called the power angle, and the half power angle is commonly used, that is, the angle of 50% light-emitting intensity. Taking the brightest beam of the light emitted by the light-emitting element 10 as the center line, if the maximum angle to the beam with 50% of its light-emitting intensity is 60° and -60°, then the light-emitting angle of the light-emitting element 10 is considered to be 120°. It should be noted that the above are only a limited number of examples, and the definition and measurement of the light-emitting angle will not be elaborated here.

In this embodiment, the light-emitting angle of the light-emitting element 10 is in the range of 90° to 130°, which means that the light emitted by the light-emitting element 10 is relatively scattered in the initial stage. Such a design can ensure that the light has sufficient light coverage range after entering the optical conductor 11, providing a basis for the subsequent light gathering and mixing. Through the action of the optical conductor 11, the scattered light emitted by the light-emitting element 10 is gathered, mixed and diffused, and finally the light-emitting angle of the light emitted by the light-emitting element 10 after passing through the optical conductor 11 is controlled within the range of 30° to 90°. Such an angle range can ensure that the output light is both concentrated and even, avoiding poor lighting effects caused by excessive dispersion or concentration of light.

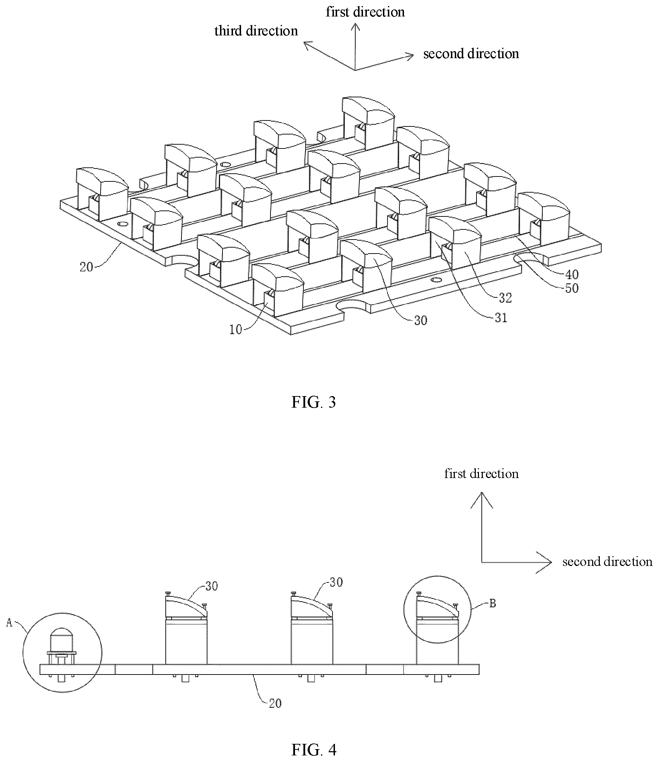

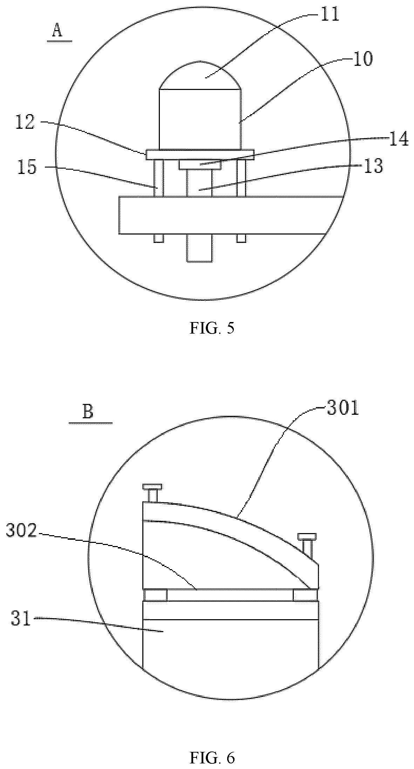

Referring to FIG. 3 to FIG. 6, the present application also includes a lens 30 provided at the side of the optical conductor 11 towards the first direction. It can be understood that the lens 30 is spaced apart at one side of the optical conductor 11, which further optimizes the distribution and control of the light. the lens 30 can focus, diverge or deflect the light, so as to meet the requirements of light shape, angle and intensity in different application scenarios, and improve the flexibility and adaptability of the optical system. Specifically, the lens 30 is a component that uses optical principles to control light. When the light passes through the lens 30, due to the refraction of the lens 30, the propagation direction of the light is changed. According to the design of the lens 30, the light can be focused to a smaller area, or diverged to a larger area, or deflected to a specific direction. the lens 30 enables the optical system to control light more accurately, achieve the expected shape, angle and intensity distribution of the beam, and meet the lighting requirements in different application scenarios.

In an embodiment, the lens 30 includes a light-incident surface 302 and a light-exiting surface 301, and the length from the light-exiting surface 301 to the light-incident surface 302 gradually decreases along the second direction.

In an embodiment, the thickness of the lens 30 gradually decreases along the second direction.

In an embodiment, the second direction is vertically downward, the length from the light-exiting surface 301 to the light-incident surface 302 gradually decreases along the second direction, and the thickness of the lens 30 gradually decreases along the second direction. This thick at upper and thin at lower structural design makes the propagation path of light inside the lens 30 change when the light passes through the lens 30 due to the thickness difference at different positions. Specifically, the light is first emitted from the light-emitting element 10, and enters the light-incident surface 302 of the lens 30 after being gathered and preliminarily adjusted by the optical conductor 11. The light is refracted and the propagation direction is changed inside the lens 30 according to the thickness change at different positions. Since the thickness of the lens 30 gradually decreases along the second direction, the propagation direction of the light gradually deflects towards the second direction during the process of passing through the lens 30. Finally, the light is emitted from the light-exiting surface 301 of the lens 30, forming a more concentrated light beam deflected towards the second direction, reducing the scattering of the light in other directions and reducing light waste.

In an embodiment, the distance between the lens 30 and the light-emitting element 10 is within the range of 3mm to 15mm.

It can be understood that by controlling the distance between the lens 30 and light-emitting element 10 within the range of 3mm to 15mm, the optical system of the present application has a more compact structure, reduced volume, and reduced weight, meeting the market demand for thin and light products. This distance design also helps to improve light efficiency and reduce energy loss of the light during propagation, thereby achieving higher brightness and better optical performance, and avoiding the problems of light loss and thick product caused by too long distance.

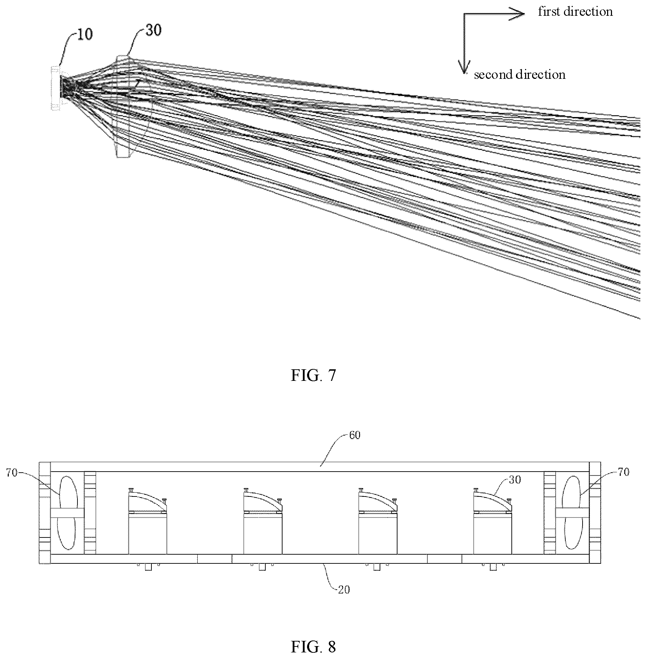

Referring to FIG. 7, in an embodiment, the lens 30 is configured to make the light passing through the lens 30 deflect towards the second direction, and the second direction is perpendicular to the first direction; and/or, the lens 30 is configured to make the light-emitting angle of the light passing through the lens 30 be a preset angle in the third direction, and the third direction is perpendicular to the first direction. In an embodiment, both the first direction and the third direction are horizontal directions, and the second direction is a vertical direction. In an embodiment, the lens 30 is configured to make the light-emitting angle of the light passing through the lens 30 in the third direction a preset angle, and the preset angle is in the range of 20° to 50°. For example, the preset angle can be 30°, that is, the optical system takes itself as the zero point, and the angle at which the light-emitting intensity in the third direction is greater than 50% of the light-emitting intensity is in the range of -15° to 15°.

In an embodiment, the optical system in this embodiment can be applied to road indicator lights. Taking the road indicator lights on a road where vehicles are traveling as an example, the first direction is a first horizontal direction corresponding to the driving direction of the vehicle, the second direction is a vertical direction pointing downward, and the third direction is a second horizontal direction perpendicular to the driving direction of the vehicle. It can be understood that the light emitted in the first direction can help the vehicle driver observe the indication information of the road indicator light more clearly. The light shifting in the second direction can reduce the loss of light in the empty direction that the vehicle driver cannot observe, so that the light is concentrated in the lower area that the vehicle driver can observe. The light-emitting angle of the light in the third direction determines the number of lanes that the light can fully display, so that the vehicle driver at the lane that needs to be indicated can more clearly observe the indication information of the road indicator light. It should be noted that only the effective number of road indicator lights is used as an example here. The optical system in this embodiment can also be applied to various lighting application scenarios such as indoor lights and stage lights, which will not be repeated here.

Referring to FIG. 3 to FIG. 6, in an embodiment, a plurality of light-emitting elements 10 are installed at the same side of the first substrate 20 in a preset arrangement layout. In an embodiment, all light-emitting elements 10 are provided in a matrix at the same side of the first substrate 20, and each light-emitting element 10 and the optical conductor 11 form the integrated structure. The first substrate 20 is electrically connected to a power source or an external power source provided thereon, and the light-emitting element 10 is electrically connected to the first substrate 20, so that the first substrate 20 provides a current path between the light-emitting element 10 and the power source. It can be understood that by arranging multiple light-emitting elements 10 in the matrix, the optical system can be compactly integrated, and the space can be effectively utilized, making the entire optical system more compact and lightweight. If more light-emitting elements 10 are needed, it is only necessary to add new light-emitting elements 10 to the first substrate 20, without making large-scale changes to the entire system, thereby improving the scalability and flexibility of the system.

Further, each light-emitting element 10 is correspondingly provided with a lens 30. In the first direction, the light-emitting element 10 and the optical conductor 11 formed integrally therewith are located between the first substrate 20 and the corresponding lens 30. It can be understood that each light-emitting element 10 corresponds to a lens 30, which can improve the control accuracy of the entire optical system to the light.

In an embodiment, the first substrate 20 is provided with a plurality of first through holes having the same number as the number of the light-emitting element 10, and the plurality of first through holes are provided in a matrix at the first substrate 20. The light-emitting element 10 is assembled with the corresponding first through holes through the corresponding first connection assembly. Specifically, the first connection assembly includes a first threaded rod 13 and a first mounting seat 12, inner threads are provided in the first through hole, outer threads are provided outside the first threaded rod 13, and the first threaded rod 13 is cooperated with the thread of the first through hole. The first mounting seat 12 is provided at one end of the first threaded rod 13 towards the first direction, and the first mounting seat 12 is parallel to the first substrate 20. The light-emitting element 10 is installed at a side of the first mounting seat 12 away from the first substrate 20, and the position of the light-emitting element 10 and the optical conductor 11 can be adjusted by adjusting the first threaded rod 13, so that the light-emitting element 10 is close to or away from its corresponding lens 30, so as to adjust the light-emitting angle of the light emitted through the lens 30. It can be understood that, as the light-emitting element 10 and the optical conductor 11 age or the lens 30 ages, the light emitting angle of the light-emitting element 10 or the optical performance of the lens 30 may change compared with the factory settings. Through the adjustable threads connection, the relative positions of the light-emitting element 10 and the optical conductor 11 to the lens 30 can be readjusted when necessary to compensate for these changes and maintain the optical performance of the system stable.

In an embodiment, the first connection assembly further includes at least two first guide rods 15, and a first guide hole corresponding to the first guide rod 15 is provided at the circumference side of the first through hole. One end of the first guide rod 15 is connected to the first mounting seat 12, and the other end of the first guide rod 15 passes through the first guide hole. A first bearing 14 is provided at one side of the first mounting seat 12 close to the first substrate 20, the inner ring of the first bearing 14 is connected to the first threaded rod 13, and the outer ring of the first bearing 14 is connected to the first mounting seat 12. There is no direct connection relationship between the first threaded rod 13 and the first mounting seat 12. Thus, when the position of the light-emitting element 10 is adjusted by regulating the first threaded rod 13, the light-emitting element 10 will not rotate with the rotation of the first threaded rod 13, but will only move closer to or farther from the corresponding lens 30 with the movement of the first mounting seat 12. It can be understood that during the installation and adjustment of the light-emitting element 10, it is necessary to ensure that the light-emitting element 10 and the optical conductor 11 can move accurately in a straight line direction to adjust the distance between the light-emitting element 10 and the lens 30, thereby optimizing the emitting angle of the light. At the same time, it is necessary to avoid the rotation of the module during the movement process, so as not to affect the propagation direction of the light and the stability of the optical system. In this embodiment, the integrated structure composed of the light-emitting element 10 and the optical conductor 11 can move accurately in a straight line direction through the first guide rod 15 and the first bearing 14, thereby improving the adjustment accuracy and reliability of the system.

In an embodiment, the integrated structure composed of a plurality of light-emitting elements 10 and the optical conductor 11 is provided in a matrix at the first substrate 20, and a first slide track 40 and a second slide track 50 are provided at both sides of each row of light-emitting elements 10 in the second direction. The lens 30 corresponding to each integrated structure composed of the light-emitting element 10 and the optical conductor 11 is slidably mounted at the first slide track 40 of the corresponding row through a first sliding assembly, and is slidably mounted at the second slide track 50 of the corresponding row through a second sliding assembly. Thus, each the lens 30 can move along the second direction at the first slide track 40 and the second slide track 50 to change its relative position with the integrated structure composed of the corresponding light-emitting element 10 and the optical conductor 11 in the second direction, thereby changing the deviation angle of the light emitted by the corresponding optical system 10 after refraction in the second direction. It can be understood that the lens 30 is installed at the first slide track 40 and the second slide track 50 through the first sliding assembly and the second sliding assembly, and can move freely along the second direction. The first slide track 40 and the second slide track 50 provide guidance and restriction for the movement of the lens 30 to ensure that the lens 30 moves along the path of the second direction. When the relative position of the lens 30 and the integrated structure composed of the light-emitting element 10 and the optical conductor 11 changes, the refraction path of the light after passing through the lens 30 will also change accordingly, thereby adjusting the deviation angle of the light. By flexibly adjusting the position of the lens 30, fine-tuning can be performed during the use of the system to compensate for the degradation of the optical performance caused by component aging or environmental changes, thereby extending the service life of the system.

In an embodiment, the first sliding assembly includes a first sliding member 31, a first connecting member and a second bearing, The first sliding member 31 is slidably matched with the first slide track 40, and two second through holes are provided at one side of the lens 30 corresponding to the first sliding member 31. Inner threads are provided inside the second through holes, outer threads are provided outside the first connecting member, and the two first connecting members are thread-matched with the two second through holes respectively. One end of the first connecting member passes through the corresponding second through hole and is connected to the corresponding inner ring of the second bearing, and the outer ring of the second bearing is connected to the first sliding member 31. In an embodiment, the first connecting member, the second through hole, and the second bearing correspond in the first direction. The second sliding assembly includes a second sliding member 32, a second connecting member and a third bearing. The second sliding member 32 is slidably matched with the second slide track 50, and two third through holes are provided at one side of the lens 30 corresponding to the second sliding member 32. Inner threads are provided inside the third through holes, outer threads are provided outside the second connecting member, and two second connecting members are thread-matched with the two third through holes respectively. One end of the second connecting member passes through the corresponding third through hole and is connected to the inner ring of the corresponding third bearing, and the outer ring of the third bearing is connected to the second sliding member 32. In an embodiment, the second connecting member, the third through hole and the third bearing correspond in the first direction. In an embodiment, the projection of the lens 30 in the first direction is a rectangle, and the two second through holes and the two fourth through holes are respectively located at the four corners of the projection of the lens 30 in the first direction, so that the inclination of the lens 30 relative to the integrated structure composed of the light-emitting element 10 and the optical conductor 11 can be adjusted by regulating the two first connecting members and the two second connecting members. It can be understood that by flexibly adjusting the position and inclination of the lens 30, fine-tuning can be performed during the use of the system to compensate for the degradation of the optical performance caused by aging of components or environmental changes, thereby extending the service life of the system.

In an embodiment, the first sliding member 31 and the second sliding member 32 include a semiconductor refrigeration plate, the cold end of the semiconductor refrigeration plate is towards the side close to the integrated structure composed of the light-emitting element 10 and the optical conductor 11, and the hot end is towards the side away from the integrated structure composed of the light-emitting element 10 and the optical conductor 11.

In an embodiment, as shown in FIG. 8, a light-transmitting cover 60 is also included, and the light-transmitting cover 60 is provided at the first substrate 20. The light-emitting element 10, the optical conductor 11 and the lens 30 are enclosed between the light-transmitting cover 60 and the first substrate 20. Cooling fans 70 are provided at both sides of the enclosed space of the first substrate 20 and the light-transmitting cover 60 in the second direction, and the wind directions of the two cooling fans 70 are the same, and both are towards the direction opposite to the second direction, that is, one cooling fan 70 blows air towards the light-emitting element 10, the optical conductor 11, and the lens 30, and the other cooling fan 70 draws air from the position where the light-emitting element 10, the optical conductor 11, and the lens 30 are provided and blows outward. Specifically, the two cooling fans 70 are electrically connected to the first substrate 20.

It can be understood that the light-transmitting cover 60 and the first substrate 20 form a relatively closed space, in which the optical components are placed, and the material properties of the light-transmitting cover 60 can ensure the normal transmission of light while blocking the interference of the external environment to the internal components. Furthermore, one cooling fan 70 blows air into the optical system, and the other cooling fan 70 draws air from the optical system, forming a complete air convection cycle, in which hot air is drawn out and cold air is introduced, thereby achieving effective heat dissipation of the optical system.

The above embodiments are only intended to further illustrate the technical content of the present application, so that readers can understand it more easily, but it does not mean that the implementation method of the present application is limited to this. Any technical extension or re-creation made according to the present application shall be protected by the present application. The protection scope of the present application shall be subject to the claims.

## Claims

1. An optical system, **characterized by** comprising:
a light-emitting element (10) configured to emit light in a first direction;
an optical conductor (11) at least covering a light-emitting side of the light-emitting element (10) in the first direction; and
a lens (30) provided at one side of the optical conductor (11) towards the first direction,
wherein the light-emitting element (10) and the optical conductor (11) are integrally formed, and a light diffusing agent is added to a forming material of the optical conductor (11).

2. The optical system according to claim 1, wherein the lens (30) comprises a light-incident surface (302) and a light-exiting surface (301), and a distance between the light-exiting surface (301) and the light-incident surface (302) gradually decreases along a second direction.

3. The optical system according to claim 1, wherein a thickness of the lens (30) gradually decreases along a second direction.

4. The optical system according to claim 1, wherein a distance between the lens (30) and the light-emitting element (10) is in a range of 3mm to 15mm.

5. The optical system according to claim 1, wherein the light diffusing agent comprises one or more of silicon dioxide, polysiloxane particles, aluminum oxide and borosilicate glass.

6. The optical system according to claim 1, wherein the optical conductor (11) comprises a first curved surface structure (111) configured to gather an angle of light emitted by the light-emitting element (10); and
a cross-sectional area of the first curved surface structure (111) along the first direction is unchanged or gradually decreases.

7. The optical system according to claim 6, wherein the first curved surface structure (111) comprises a first light-guiding portion (1111) provided at one end of the first direction, and a cross-sectional area of the first light-guiding portion (1111) gradually decreases along the first direction.

8. The optical system according to claim 6, wherein a length of the first curved surface structure (111) in the first direction is in a range of 1mm to 20mm; and/or
a cross-sectional diameter of the first curved surface structure (111) in the first direction is in a range of 2mm to 50mm.

9. The optical system according to claim 1, wherein the optical conductor (11) is integrated with the light-emitting element (10) through a molding process.

10. The optical system according to claim 1, wherein a light-emitting angle of the light-emitting element (10) is in a range of 90° to 130°; and/or
a light-emitting angle of light emitted by the light-emitting element (10) after passing through the optical conductor (11) is in a range of 30° to 90°.
